# EUROPEAN PATENT APPLICATION

(11) **EP 0 681 140 A2**
(43) Date of publication of application: **08.11.1995**
(21) Application number: 95200851.4
(22) Date of filing: 04.04.1995
(51) Int. Cl.: F16M 3/00

(54) **Housing for machines and devices which make use of such a housing**

(30) Priority: 05.04.1994 BE 9400346
(71) Applicant: ATLAS COPCO AIRPOWER N.V., B-2610 Wilrijk (BE)
(72) Inventor: Segers, Karel, B-9140 Temse (BE)
(74) Representative: Donné, Eddy

(57) **Abstract**

Housing for machines, characterized in that it consists of the combination of a fixed part (3) which partly covers the machine (2) and two mainly similar-shaped parts (4,5), which are provided on either side of the fixed part (3).

## Description

This invention concerns a housing for machines, as well as devices, in particular compressor and generator units, which make use of such a housing.

Numerous housings for machines are already known which make use of rectangular or flat doors in order to provide access to the machines.

Said houses are disadvantageous in that the underlying space, and thus also the machine remains difficult to reach for a person because a traditional door opening does not provide easy access. In many cases, the posts of the housing form a considerable obstruction.

Also, the present invention aims a housing for machines which excludes the aforementioned and other disadvantages, in other words a housing which makes the machine situated underneath it easily accessible for possible repairs, settings, controls, and such.

Moreover, the invention aims a housing of which several parts can be universally used, with no regard to the size of the housing to be realized.

To this aim, the invention concerns a housing for machines, characterized in that it consists of the combination of a fixed part which partly covers the machine and two mainly similar-shaped, preferably moveable parts, which are provided on either side of the fixed part.

It is clear that the housing according to the invention also offers the advantage that it has a universal character, with which is meant in the first place that by producing one pair of similar-shaped, moveable parts, housings can be made in different volumes, merely by selecting a larger or smaller fixed part.

According to the most preferred embodiment, the fixed part is erected diagonally and the above-mentioned similar-shaped, moveable parts form diagonal casings which can be removed or swung aside. As a result, the machine is optimally accessible.

According to a special embodiment, the above-mentioned similar-shaped parts are identical or equal.

In order to better explain the characteristics of the invention, the following preferred embodiment is described as an example only without being limitative in any way, with reference to the accompanying drawing, in which:
figure 1 shows a view in perspective of a housing for machines according to the invention;
figure 2 shows a view in perspective of a housing for machines with a larger volume.

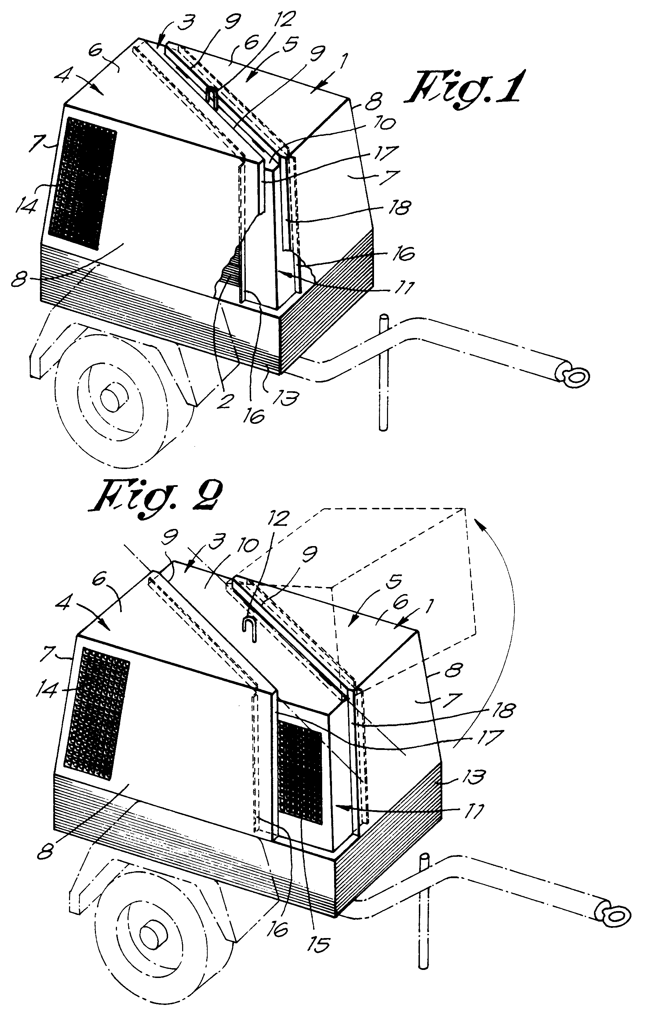

As represented in figures 1 and 2, the invention concerns a housing 1 for a machine 2. According to the invention, this consists of a fixed part 3 which partly covers the machine 2 and two mainly similar-shaped, moveable parts, 4 and 5 respectively, which are provided on either side of the fixed part 3, and which are preferably erected symmetrically in relation to one another.

As shown in the example, the similar-shaped parts 4 and 5 form an angle of the housing 1, whereby each part, 4 and 5 respectively, consists of a top wall 6 and two side walls 7 and 8. The top wall is preferably horizontal, whereas the side walls 7 and 8 in this case point somewhat slantingly downward, which does not imply, however, that they cannot be erected vertical as well.

The similar-shaped parts 4 and 5 are preferably, yet not necessarily identical, in other words not only equally shaped, but also equally sized.

The fixed part 3 is preferably erected diagonally, whereas the above-mentioned parts 4 and 5 so to say form diagonal casings.
In the preferred embodiment, the top wall 6 of each of the above-mentioned parts 4 and 5 consists of a right-angled triangle, of which the hypotenuse 9 runs parallel with the diagonal line of the housing 1. The hypotenuses 9 of the parts 4 and 5 hereby point towards one another.

The fixed part 3 preferably consists of a top surface 10 which extends along the diagonal line of the housing 1 and two upright angle parts 11.

The above-mentioned similar-shaped parts 4 and 5 are hinge-mounted to the fixed part 3, preferably to the top side of the fixed part 3, one and other such that the hinge pins are situated horizontally.

The fixed part 3 can be provided with a feed-through aperture 12 for a fixing element for lifting means, which for example consists of an eye which makes it possible to hang the machine 2, together with the housing 1, on the hook of a crane or such.

The housing 1 is preferably placed on an all-round basis 13.

It is clear that an air hole 14 can be provided, either exclusively in the parts 4 and 5, as represented in figure 1, or that both in the fixed part 3 and in the parts 4 and/or 5 can be provided an air hole 15, 14 respectively, as represented in figure 2.

As is schematically represented in figure 2, means can be provided which make it possible to lock the above-mentioned similar-shaped parts 4 and 5, or possibly only one part thereof, in a tipped-up position, such that these parts 4 and 5 so to say form a roof, so that at least the machine 2 and partly also the persons working at it are protected against precipitation in case the housing 1 is in the opened position.
The parts 3 and/or 4 and/or 5 can also be provided with folded-back edges 16, 17 and 18 which prevent precipitation from penetrating in the closed housing 1.

It is clear that the parts 4 and 5 can be provided with latches or such so as to lock them in closed position.

The figures 1 and 2 make clear that, by making use of the same parts 4 and 5, a smaller or larger housing volume can be provided for in a simple manner, merely by changing the dimensions of the fixed part 3.

The invention is especially suited for compressor and/or generator units because they often require a very large accessibility. As represented in the figures, the invention is particularly suited for devices, in particular compressor and/or generator units, which are made in the shape of a trolley.

It should be noted that the notion similar-shaped does not necessarily imply a strictly mathematical similarity.

The present invention is by no means limited to the embodiments described as an example and represented in the accompanying drawings; on the contrary, such a housing for machines, as well as devices equipped with it, can be made in all sorts of variants while still remaining within the scope of the invention.

## Claims

1. Housing for machines, consisting of the combination of a fixed part (3) which partly covers the machine (2) and two mainly similar-shaped parts (4,5), which are provided on either side of the fixed part (3), characterized in that each of the similar-shaped parts (4,5) forms an angle of the housing (1), whereby each part (4,5) contains a top wall (6) and at least two side walls (7,8).

2. Housing according to claim 1, characterized in that the fixed part (3) is erected diagonally and in that the above-mentioned similar-shaped parts (4,5) form diagonal casings.

3. Housing according to claim 2, characterized in that the top wall (6) of each of the above-mentioned similar-shaped parts (4,5) consists of a right-angled triangle of which the hypotenuse (9) runs parallel with the diagonal line of the housing (1) and whereby these hypotenuses (9) of the two parts (4,5) point towards one another.

4. Housing according to claim 2 or 3, characterized in that the fixed part (3) mainly consists of a top surface (10) which extends along the diagonal line of the housing (1) and two upright angle parts (11).

5. Housing according to claim 1, characterized in that the above-mentioned similar-shaped parts (4,5) can be locked in a tipped-up position, such that these parts (4,5) so to say form a roof.

6. Housing according to any of the preceding claims, characterized in that the fixed part (3) is provided with a feed-through aperture (12) for a fixing element for lifting means.

7. Housing according to any of the preceding claims, characterized in that it is placed on an all-round basis (13).

8. Device, characterized in that it is equipped with a housing (1) according to any of the preceding claims.

9. Device according to claim 8, characterized in that it consists of a compressor or generator unit.
